Europäisches Patentamt

European Patent Office

Office européen des brevets

(11) Publication number: **0 252 037**
**B1**

(12) **EUROPEAN PATENT SPECIFICATION**

(45) Date of publication of patent specification: **04.04.90**

(51) Int. Cl.⁵: **F 16 J 15/54,** F 04 D 29/10, B 01 F 15/00

(21) Application number: **87850143.6**

(22) Date of filing: **29.04.87**

(54) **A seal device.**

(30) Priority: **27.06.86 SE 8602873**

(43) Date of publication of application:
**07.01.88 Bulletin 88/01**

(45) Publication of the grant of the patent:
**04.04.90 Bulletin 90/14**

(84) Designated Contracting States:
**AT DE FR GB IT NL SE**

(56) References cited:
**US-A-3 273 906**
**US-A-3 371 720**
**US-A-3 953 146**
**US-A-4 236 872**

(73) Proprietor: **Flygt AB**
**Box 1309**
**S-171 25 Solna (SE)**

(72) Inventor: **Stahl, Peter**
**Nämndemansbacken 17**
**S-122 36 Enskede (SE)**

(74) Representative: **Larsson, Sten**
**Flygt AB Box 1309**
**S-171 25 Solna (SE)**

Courier Press, Leamington Spa, England.

## Description

The invention concerns a device for preventing solid bodies from entering a slot between two relative each other rotating machine parts.

Some types of machines such as electrically driven pumps and mixers are provided with one or several seals, usually mechanical seals, between the hydraulic unit and the driving unit. The seal prevents liquid from going along the driving shaft into the driving unit and cause damages in the latter.

A mechanical seal consists of two seal rings, one rotating and one non-rotating, which are pressed towards each other. The seal is lubricated and cooled by the surrounding medium and are exposed to severe strain, especially if the medium contains big amounts of solid bodies. Because of the high pressure these solid bodies may enter between the seal surfaces and cause damages, thus creating a leakage.

According to US—A—3273906 it is proposed to solve the problem to prevent pollutions from entering a slot by providing the slot with a helically formed groove so directed, that the pollutions are fed in a determined direction. This solution could function well under certain conditions, but will not be sufficient when the liquid contains elongated fibres as those would be stuck between the surfaces.

US—A—3 953 146 shows another solution where cutting means are used to shred elongated objects which otherwise might clog the impeller.

Another often used solution is to use a pure liquid or gas to rinse the slot between the two surfaces (EP—A—0207021). This liquid or gas is then brought under pressure to the space containing the mechanical seal that should be protected and passes out between the relative each other rotating parts. The polluted liquid is then held back. This method has sometimes certain disadvantages as the pure medium costs money and also may cause a harmful dilution of the surrounding medium.

In order to eliminate the need for flush water the invention provides for a specific seal device which protects the housing where the mentioned mechanical seal is situated. The new seal device comprises counter-directed thread profiles or helically formed grooves and a cutting means according to the claims.

The invention is described more closely below with reference to the enclosed drawings.

Fig. 1 shows a sectional view of a part of a mixer provided with the seal device according to the invention,

Fig. 2 shows a part of the device seen from above and

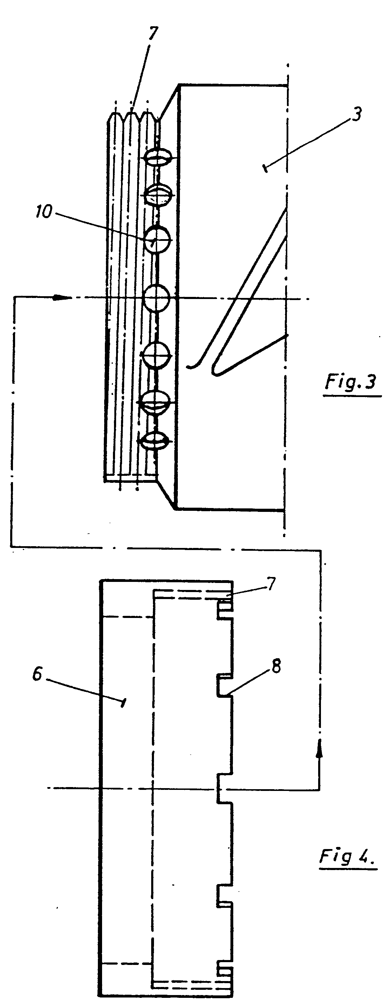

Fig. 3 shows the main parts of the seal in more detail.

In the drawings 1 stands for a rotary shaft, 2 an impeller having a hub 3, 4 stands for a bearing, 5 a mechanical seal, 6 a socket having a helically formed groove 7 and cutting means 8. 9 stands for a chamfered surface, 10 a hole in the hub and 11 a seal housing.

When the mixer operates vortexes are created as well as under pressure in certain areas at the impeller blades, especially in front of the blades seen in the direction of the flow. These phenomena means that pollutions in the liquid such as fibres, tend to collect in these areas. They might then enter the housing 11 containing the mechanical seal 5 and cause damages there and they might also be wound up around the hub 3 creating vibrations and a worse efficiency.

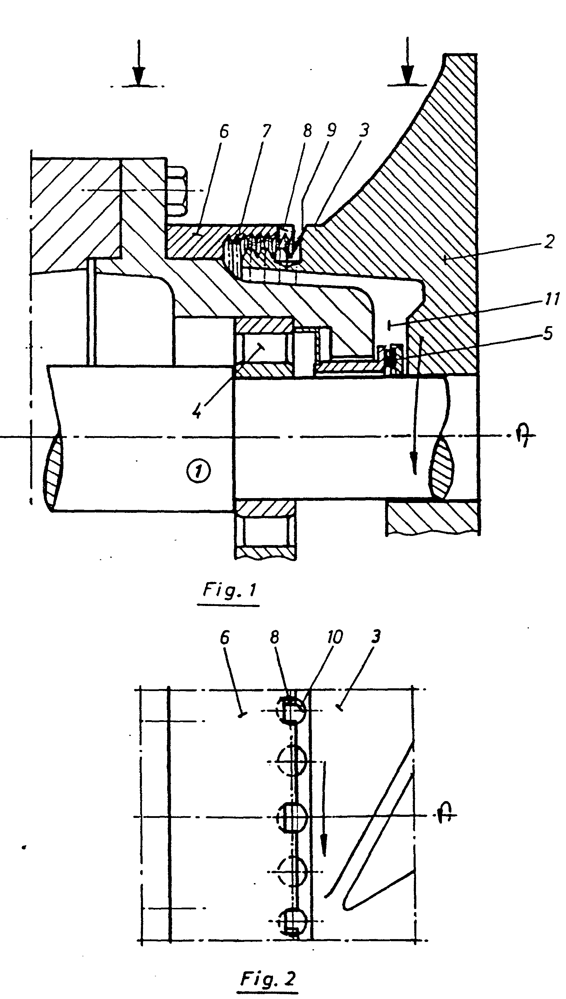

According to the invention a non-rotating socket 6 surrounds the hub 3. The latter and/or the socket 6 are provided with a number of helically formed grooves 7 on their respective peripheries so arranged, that when the hub rotates, a feeding is created in the direction of the opening, (to the right in Fig. 1). In this way pollutions are forced outwards and towards the impeller.

In order to eliminate the risk that elongated fibres are wound up around the hub 3, the device is completed with cutting means 8 at the inlet of the socket. The cutting means are here formed as a number of recesses or slots 8 on the outer edge of the socket 6, which cooperate with a number of radial holes 10 in the hub 3 and thus cutting the fibres.

In order to further increase the possibilities to take away pollutions from the sensitive area, the hub 3 is chamfered at the end of the socket 6, thus diminishing the risks for a collection of pollutions around the slot.

## Claims

1. A seal device arranged between an impeller hub (3) and a non-rotating ring (6) the latter partly surrounding the former and both forming parts of a submersible pump or mixer intended for operation in liquid containing solid bodies such as waste water and where one or more mechanical seals (5) are used, characterized in that the ring (6) is internally provided with a helically formed groove (7) and with slots (8) at its end part cooperating with holes (10) at the hub (3), the slots (8) and the holes (10) together forming cutting means.

2. A seal device according to claim 1, characterized in that the hub (3) on its outside is provided with a helically formed groove (7).

3. A seal device according to claim 1, characterized in that the ring (6) as well as the hub (3) are provided with grooves (7).

## Patentansprüche

1. Dichtungsvorrichtung, die zwischen der Nabe (3) eines Flügelrades und einem nochtrotierenden Ring (6) angeordnet ist, wobei der Ring (6) die Nabe teilweise umfaßt und Ring und Nabe Teile einer Tauchpumpe oder eines Mischers sind, die in Flüssigkeiten mit darin vorhandenen Feststoffen, die Abwässer, eingesetzt werden und wobei eine oder mehrere mechanische Dichtungen (5) vorgesehen sind, dadurch gekennzeichnet, daß der Ring (6) an seiner Innenseite mit einer schraubenförmigen Rille (7) und an seiner Stirnseite mit Einschnitten (8) versehen ist und daß die Einschnitte (8) zusammen mit den Bohrungen (10) eine Schneidevorrichtung bilden.

2. Dichtungsvorrichtung nach Anspruch 1, dadurch gekennzeichnet, daß die Nabe (3) an ihrem Außenumfang mit einer schraubenförmigen Rille (7) versehen ist.

3. Dichtungsvorrichtung nach Anspruch 1, dadurch gekennzeichnet, daß der Ring (6) an seiner Innenseite und die Nabe (3) an ihrem Außenumfang jeweils mit einer schraubenförmigen Rille (7) versehen sind.

**Revendications**

1. Dispositif d'étanchéité disposé entre un moyeu de roue à ailette (3) et un anneau non rotatif (6), ce dernier entourant partiellement le premier et les deux formant des parties d'une pompe ou d'un mélangeur submersible prévu pour fonctionner dans un liquide contenant des corps solides tels qu'une eau de rejet et dans lequel un ou plusieurs joints mécaniques (5) sont utilisés, caractérisé en ce que l'anneau (6) est pourvu sur sa surface interne d'une gorge (7) en forme d'hélice et de fentes (8) situées à sa partie formant extrémité coopérant avec des trous (10) du moyeu (3), les fentes (8) et les trous (10) étant associés pour former des moyens de coupe.

2. Dispositif d'étanchéité selon la revendication 1, caractérisé en ce que le moyeu (3) comporte sur sa face extérieure une gorge (7) en forme d'hélice.

3. Dispositif d'étanchéité selon la revendication 1, caractérisé en ce que l'anneau (6) ainsi que le moyeu (3) sont pourvus de gorges (7).

_Fig. 1_

_Fig. 2_

1

_Fig.3_

_Fig 4._

2